# EUROPÄISCHE PATENTANMELDUNG

(11) **EP 3 882 429 A1**
(43) Veröffentlichungstag der Anmeldung: **22.09.2021**
(21) Anmeldenummer: 21162584.3
(22) Anmeldetag: 15.03.2021
(51) Int. Cl.: E06B 1/60, E04F 21/00

(54) **VORRICHTUNG ZUR MONTAGE VON FENSTERRAHMEN**

(30) Priorität: 17.03.2020 AT 502292020
(71) Anmelder: Klaffenböck, Wolfgang, 4911 Tumeltsham (AT)
(72) Erfinder: Klaffenböck, Wolfgang, 4911 Tumeltsham (AT)
(74) Vertreter: Hübscher & Partner Patentanwälte GmbH

(57) **Zusammenfassung**

Es wird eine Vorrichtung zur Montage von Fensterrahmen (16) beschrieben. Um eine derartige Vorrichtung zu schaffen, die bei besonders einfacher Handhabung eine zuverlässige und zeiteffiziente Montage von Fensterrahmen unabhängig von der Beschaffenheit der Fensterlaibung ermöglicht, wird vorgeschlagen, dass gelenkig miteinander verbundene Gliederkörper (1, 2, 3) eine gemeinsame Klemmfläche (4) bilden, von der die Gliederkörper (1, 2, 3) gegen eine gemeinsame Klemmrichtung (K) abstehen, wobei die endseitigen Gliederkörper (2, 3) über einen Stelltrieb (5) verbunden und zueinander unter Ausbildung einer konvexen Klemmfläche (4) in eine Klemmstellung verlagerbar sind, wobei wenigstens eine Gruppe der Gliederkörper (1, 2, 3) Anschläge (18) zum formschlüssigen Einleiten der in Klemmstellung auftretenden Klemmkräfte in benachbarte Gliederkörper (1, 2, 3) aufweist.

## Beschreibung

Bei der Montage von Fensterrahmen ist es in der Regel üblich, diese zunächst in der Fensterlaibung exakt auszurichten und dort temporär einzuklemmen. Der dadurch entstandene Montagespalt kann dann in einem nächsten Schritt ausgeschäumt werden. Hierfür werden üblicherweise Klemmkeile oder aber auch Montageklötze eingesetzt, welche insbesondere die in Einbaulage vertikal verlaufenden Rahmenaußenseiten gegenüber dem Mauerwerk bzw. der Fensterlaibung verspannen, sodass der Fensterrahmen während des Ausschäumens des Montagespalts in der vorgegebenen Ausrichtung positioniert bleibt.

Nachteilig an derartigen Klemmkeilen und Montageklötzen ist allerdings, dass diese nach dem Aushärten des Montageschaumes aus diesem entfernt werden und die dadurch gebildeten Aussparungen neu mit Montageschaum befüllt werden müssen. Folglich muss der Monteur in der Praxis nicht nur erhebliche Zeiteinbußen in Kauf nehmen, sondern es ergibt sich ein zusätzliches Problem durch die zufolge des Aushärteprozesses bedingte Schwindung des Montageschaums, insbesondere mit den für diese Anwendung zulässigen Polyurethanschäumen. Dadurch besteht die Gefahr, dass nach dem Entfernen der Klemmkeile und dem erneuten Ausschäumen der Aussparungen der Fensterrahmen gegenüber der Fensterlaibung nicht mehr vorschriftsmäßig ausgerichtet ist.

Darüber hinaus kann sich insbesondere im Zusammenhang mit Altbauten aufgrund der dort nicht immer ebenflächigen Fensterlaibungen die exakte Ausrichtung bzw. Vorpositionierung des Fensterrahmens als schwierig erweisen, sodass die Fensterlaibung vor der Fenstermontage gegebenenfalls unter zusätzlichem Zeitaufwand erst vorbearbeitet werden muss, um die Klemmkeile bzw. -klötze einsetzen zu können und letztlich ein zufriedenstellendes Montageergebnis zu erreichen.

Es besteht somit ein Bedarf, eine Vorrichtung zur Montage von Fensterrahmen zu schaffen, die bei besonders einfacher Handhabung eine zuverlässige und zeiteffiziente Montage von Fensterrahmen unabhängig von der Beschaffenheit der Fensterlaibung ermöglicht.

Die Erfindung löst die gestellte Aufgabe dadurch, dass gelenkig miteinander verbundene Gliederkörper eine gemeinsame Klemmfläche bilden, von der die Gliederkörper gegen eine gemeinsame Klemmrichtung abstehen, wobei die endseitigen Gliederkörper über einen Stelltrieb verbunden und zueinander unter Ausbildung einer konvexen Klemmfläche in eine Klemmstellung verlagerbar sind, wobei wenigstens eine Gruppe der Gliederkörper Anschläge zum formschlüssigen Einleiten der in Klemmstellung auftretenden Klemmkräfte in benachbarte Gliederkörper aufweist.

Zufolge dieser Merkmale kann der Fensterrahmen in einem durch den Stelltrieb einstellbaren Klemmabstand, also dem Mindestabstand zwischen der Fensterrahmenaußenseite und der dieser zugewandten Fensterlaibungsfläche, in der Fensterlaibung eingeklemmt und vorpositioniert werden, bevor die Montagespalten ausgeschäumt werden. Dabei bilden die Gliederkörper in Klemmstellung sinngemäß einen durch die Klemmkraft statisch beanspruchten Stützbogen aus, der den Fensterrahmen gegenüber der entsprechenden Fensterlaibungsfläche verspannt. Dadurch, dass die Gliederkörper gelenkig miteinander verbunden sind, können auch gegebenenfalls auftretende Unebenheiten der der Klemmfläche zugewandten Fensterlaibungsfläche ausgeglichen werden, weil sich der Klemmflächenverlauf entsprechend an die Oberflächenkontur der Fensterlaibung anpassen kann. Da die Klemmkrafteinleitung in der Regel über den Scheitelbereich des in Klemmstellung gebildeten Stützbogens erfolgt, kann unabhängig von dem an der Fensterlaibung aufliegenden, eine Auflagefläche bildenden Klemmflächenabschnitt ein besonders gleichmäßiger Lastabtrag über die Gliederkörper in den Fensterrahmen bzw. ein Zwischenstück erfolgen, wenn wenigstens eine Gruppe der Gliederkörper Anschläge zum formschlüssigen Einleiten der in Klemmstellung auftretenden Klemmkräfte in benachbarte Gliederkörper aufweist, analog zu den Steinen eines Stützbogens. Dies verleiht der erfindungsgemäßen Vorrichtung bei ausreichender Flexibilität gleichzeitig eine hohe mechanische Stabilität. Dabei kann die im Scheitelbereich des Stützbogens befindliche Auflagefläche je nach Einbausituation sowohl von einem einzelnen Gliederkörper als auch von mehreren im Scheitelbereich angeordneten Gliederkörpern gebildet werden. Insgesamt schaffen die erfindungsgemäßen Merkmale die Voraussetzung, dass eine rasche Montage von Fensterrahmen unabhängig von der Beschaffenheit der Fensterlaibungen ermöglicht wird und die auftretenden Klemmkräfte sicher durch die Gliederkörper aufgenommen und weitergeleitet werden können, ohne dass die Vorrichtung selbst beschädigt wird. Darüber hinaus wird eine kompakte Bauweise der Vorrichtung ermöglicht, sodass diese problemlos im Montageschaum verbleiben kann und der Fensterrahmen selbst bei gegebenenfalls auftretenden Schwindungsvorgängen des Montageschaums immer in der vorgegebenen Ausrichtung relativ zur Fensterlaibung positioniert bleibt.

Um in Klemmstellung trotz einer ausreichenden Flexibilität der Klemmfläche einen guten Klemmkraftabtrag durch die Gliederkörper zu ermöglichen, wird vorgeschlagen, dass die Gliederkörper im Querschnitt keilförmig ausgebildet sind, sodass die einzelnen Querschnitte der Gliederkörper in Klemmstellung Teilsegmente eines Kreises bilden. Der sich gegen die gemeinsame Klemmrichtung verjüngende Keilquerschnitt der einzelnen Gliederkörper erlaubt einerseits einen gewissen Bewegungsspielraum der Gliederkörper zueinander und andererseits bilden deren Seitenwangen Anschläge zum formschlüssigen Einleiten der in Klemmstellung auftretenden Klemmkräfte in benachbarte Gliederkörper.

Besonders günstige Montagebedingungen bei gleichzeitig hoher mechanischer Stabilität können dadurch erreicht werden, dass die endseitigen Gliederkörper in eine Führungsnut eines Basisschenkels eingreifende Lagerbolzen aufweisen. Die Führungsnut des Basisschenkels kann dabei eine Gleitschiene für die Lagerbolzen bilden, sodass eine zuverlässige Stellbewegung der endseitigen Gliederkörper zueinander ermöglicht wird. Vorzugsweise weist der Basisschenkel zwei einander in Lagerbolzenlängsrichtung gegenüberliegende Führungsnuten auf, in welche die jeweiligen Lagerbolzenendabschnitte eingreifen. Um die Positionierung des Fensterrahmens für den Monteur weiter zu vereinfachen, kann der Basisschenkel bereits vor der Montage an einer entsprechenden Stelle der Fensterrahmenaußenseite angebracht werden, beispielsweise über eine Schraub - oder Steckverbindung.

Damit auch bei schlechter Zugänglichkeit des Montagespalts eine zuverlässige Klemmeinstellung der erfindungsgemäßen Vorrichtung ermöglicht wird, empfiehlt es sich, dass der Stelltrieb eine Stellschraube ist, die einen endseitigen Gliederkörper durchsetzt und in ein Innengewinde des gegenüberliegenden endseitigen Gliederkörpers eingreift. Dabei kann ein erster endseitiger Gliederkörper beispielsweise ein Stützlager bilden, wohingegen der gegenüberliegende endseitige Gliederkörper relativ zum ersten Gliederkörper über die Stellschaube verlagerbar ist, indem eine in die Stellschraube eingeleitete Drehbewegung über das Innengewinde in eine translatorische Stellbewegung des verlagerbaren Gliederkörpers übersetzt wird. Der Monteur kann somit auf einfache Weise den benötigten Klemmabstand mithilfe eines Schraubenziehers bzw. eines passenden Einstellwerkzeuges einstellen, wobei aufgrund der lediglich linearen Zustellbewegung des Schraubenziehers auch bei geringem Raumangebot und schlechter Zugänglichkeit des Montagespalts eine problemlose Einstellung der Vorrichtung ermöglicht wird. Darüber hinaus erlaubt das Vorsehen einer Stellschraube einerseits eine bedingt durch deren Gewindegang stufenlose Einstellung des Klemmabstandes und andererseits schafft die Stellschraube durch deren selbsthemmende Wirkung eine hohe mechanische Stabilität des in Klemmstellung gebildeten Stützbogens.

In diesem Zusammenhang ergeben sich bei kompakter Bauweise besonders günstige Handhabungsbedingungen, wenn der von der Stellschraube durchsetzte Gliederkörper eine Aussparung für den Stellschraubenkopf aufweist. Dies bedeutet, dass in Ruhestellung die Gesamtlänge der aneinandergereihten Gliederkörper etwa der Länge der Stellschraube entspricht, wodurch sich ein günstiges Packmaß der Vorrichtung ergibt.

Um trotz zuverlässiger Funktionsweise eine hohe Wirtschaftlichkeit bei der Fertigung der erfindungsgemäßen Vorrichtung zu erzielen, empfiehlt es sich, dass Lagerbolzen in Ausnehmungen der Gliederkörper eingesetzt sind. Dadurch können zumindest die Gliederkörper zusammen mit den Lagerbolzen als gemeinsames Spritzgussbauteil gefertigt werden, beispielsweise indem mithilfe eines Hybridverfahrens die in die Formwerkzeuge einer Spritzgussmaschine eingelegten Lagerbolzen umspritzt und dadurch in die endseitigen Gliederkörper eingebettet werden. Zudem kann vorgesehen sein, dass die Stellschraube den Lagerbolzen eines endseitigen Gliederkörpers durchsetzt und in ein Innengewinde des Lagerbolzens des gegenüberliegenden endseitigen Gliederkörpers eingreift. Zufolge dieser Maßnahmen ergeben sich neben einer hohen Wirtschaftlichkeit in der Fertigung und einer robusten Bauweise auch einfachere Montagebedingungen, weil der Monteur selbst bei schwer zugänglichen Montagespalten bzw. wenig Raumangebot dennoch den gewünschten Klemmabstand mithilfe eines Schraubenziehers oder entsprechenden Einstellwerkzeugen problemlos einstellen kann.

In der Zeichnung ist der Erfindungsgegenstand beispielsweise dargestellt. Es zeigen
- Fig. 1: eine Draufsicht auf eine erfindungsgemäße Vorrichtung in einer Ruhestellung,
- Fig. 2: einen Schnitt entlang der Linie II - II und
- Fig. 3: eine der Fig. 2 entsprechende Darstellung der Vorrichtung in einer Klemmstellung.

Eine Vorrichtung zur Montage von Fensterrahmen umfasst gelenkig miteinander verbundene Gliederkörper 1, 2, 3 die eine gemeinsame Klemmfläche 4 bilden. Die Gliederkörper 1, 2, 3 stehen von der Klemmfläche 4 gegen eine gemeinsame Klemmrichtung K ab. Dabei sind die endseitigen Gliederkörper 2, 3 über einen Stelltrieb 5 miteinander verbunden.

Gemäß der dargestellten Ausführungsform sind die Gliederkörper 1 im Querschnitt keilförmig ausgebildet, wobei die endseitigen Gliederkörper 2, 3 wenigstens teilweise einen keilförmigen Querschnitt aufweisen. Darüber hinaus weisen die endseitigen Gliederkörper 2, 3 Lagerbolzen 6, 7 auf, die in eine Führungsnut 8 eines Basisschenkels 9 eingreifen und in Ausnehmungen 10 der Gliederkörper 2, 3 eingesetzt sind.

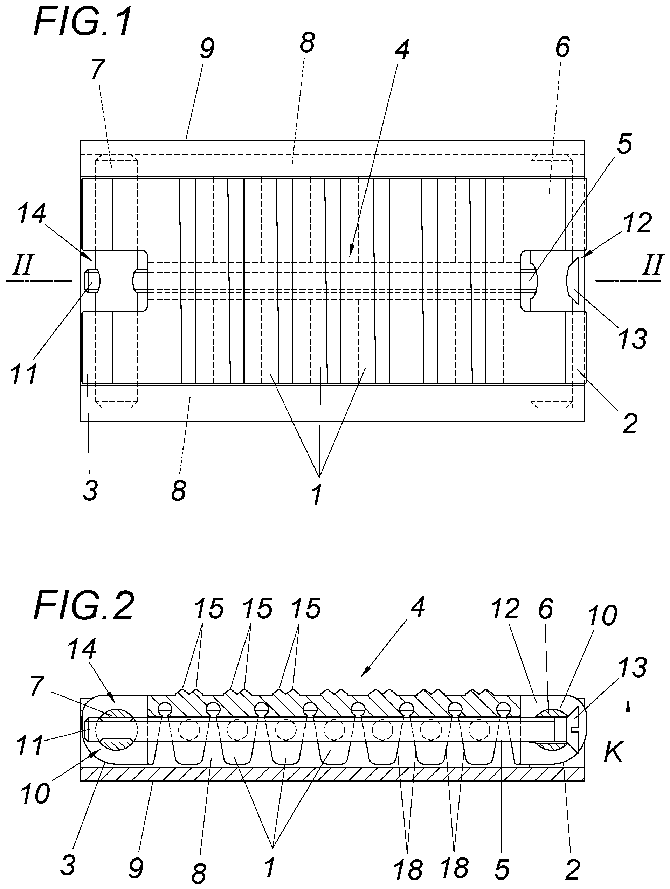

Der Stelltrieb 5 umfasst im vorliegenden Ausführungsbeispiel eine Stellschraube 11, die den Lagerbolzen 6 eines endseitigen Gliederkörpers 2 durchsetzt und in das Innengewinde des Lagerbolzens 7 des gegenüberliegenden endseitigen Gliederkörpers 3 eingreift. Um eine kompakte Bauweise zu ermöglichen, weist der von der Stellschraube 11 durchsetzte Gliederkörper 2 eine Aussparung 12 für den Stellschraubenkopf 13 auf, wobei grundsätzlich auch der gegenüberliegende Gliederkörper 3 eine Aussparung 14 aufweisen kann. Um eine sichere Positionierung der Vorrichtung im Montagespalt zu ermöglichen, können die Gliederkörper 1, 2, 3 in sämtlichen Ausführungsformen einer erfindungsgemäßen Vorrichtung grundsätzlich Abstandshalter 15 aufweisen, die von der Klemmfläche 4 in Klemmrichtung K abstehen, wie dies in Fig. 2 angedeutet wird. Die Abstandshalter 15 bewirken dabei eine Erhöhung des Reibungskoeffizienten zwischen den Gliederkörpern 1, 2, 3 und der Fensterlaibung 17 und ermöglichen einen problemlosen Lastabtrag der in Klemmstellung auftretenden Klemmkraft.

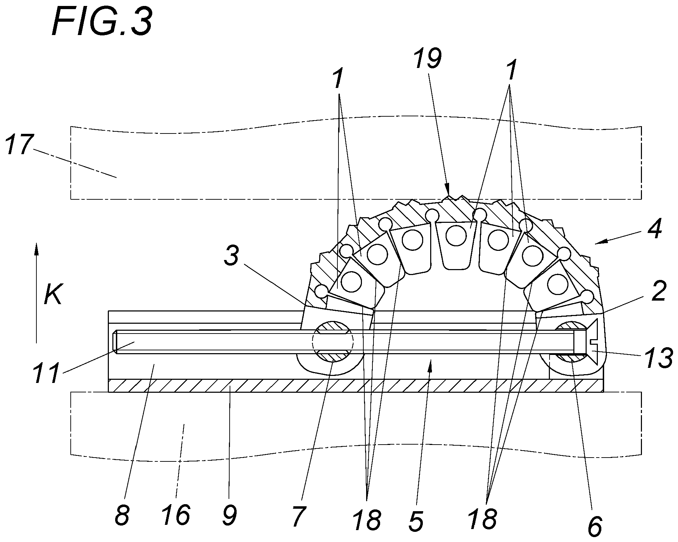

Fig. 3 soll das Funktionsprinzip einer erfindungsgemäßen Vorrichtung verdeutlichen. Durch Drehen der Stellschraube 11, beispielsweise mithilfe eines am Stellschraubenkopf 13 angesetzten Schraubenziehers, wird zunächst eine Rotationsbewegung in die Stellschraube 11 eingeleitet, die über das Innengewinde des im endseitigen Gliederkörper 3 eingesetzten Lagerbolzens 7 in eine translatorische Stellbewegung dieses endseitigen Gliederkörpers 3 übersetzt wird. Dadurch kann der endseitigen Gliederkörper 3 relativ zum fest gelagerten Gliederkörper 2 unter Ausbildung einer konvexen Klemmfläche 4 in eine in Fig. 3 gezeigte Klemmstellung verlagert werden, wobei die Führungsnuten 8 des Basisschenkels 9 Gleitschienen für den Lagerbolzen 7 des Gliederkörpers 3 bilden. Durch den somit gebildeten Stützbogen kann ein in der Fig. 3 strichliert angedeuteter Fensterrahmen 16 in eine Fensterlaibung 17 in einem vorgegebenen Klemmabstand eingeklemmt und vorpositioniert werden, bevor der Montagespalt zwischen Fensterrahmen 16 und Fensterlaibung 17 mit Montageschaum befüllt werden kann.

Dadurch, dass wenigstens eine Gruppe der Gliederkörper 1, 2, 3 Anschläge 18 zum formschlüssigen Einleiten der in Klemmstellung auftretenden Klemmkräfte in benachbarte Gliederkörper 1, 2, 3 aufweist, wobei dieser Effekt in der vorliegenden Ausführungsform durch die keilförmigen Querschnitte der Gliederkörper 1, 2, 3 weiter begünstigt wird, kann unabhängig von dem an der Fensterlaibung 17 aufliegenden, eine Auflagefläche 19 bildenden Klemmflächenabschnitt ein besonders gleichmäßiger Lastabtrag über die Gliederkörper 1, 2, 3 in den Fensterrahmen 16 bzw. den Basisschenkel 9 erfolgen. Die Auflagefläche 19 befindet sich im Scheitelbereich des durch die Gliederkörper 1, 2, 3 gebildeten Stützbogens, wie dies in Fig. 3 zu erkennen ist.

Um darüber hinaus die Montagebedingungen weiter zu verbessern, kann der Basisschenkel 9 beispielsweise über eine nicht näher dargestellte Schraub- oder Steckverbindung am Fensterrahmen 16 angebracht werden.

Gemäß einigen Ausführungsformen können die Gliederkörper 1, 2, 3 über Filmscharniere gelenkig miteinander verbunden und somit als einstückiges Spritzgussbauteil ausgebildet sein.

## Patentansprüche

1. Vorrichtung zur Montage von Fensterrahmen (16), **dadurch gekennzeichnet, dass** gelenkig miteinander verbundene Gliederkörper (1, 2, 3) eine gemeinsame Klemmfläche (4) bilden, von der die Gliederkörper (1, 2, 3) gegen eine gemeinsame Klemmrichtung (K) abstehen, wobei die endseitigen Gliederkörper (2, 3) über einen Stelltrieb (5) verbunden und zueinander unter Ausbildung einer konvexen Klemmfläche (4) in eine Klemmstellung verlagerbar sind, wobei wenigstens eine Gruppe der Gliederkörper (1, 2, 3) Anschläge (18) zum formschlüssigen Einleiten der in Klemmstellung auftretenden Klemmkräfte in benachbarte Gliederkörper (1, 2, 3) aufweist.

2. Vorrichtung nach Anspruch 1, **dadurch gekennzeichnet, dass** die Gliederkörper (1, 2, 3) im Querschnitt keilförmig ausgebildet sind.

3. Vorrichtung nach einem der Ansprüche 1 oder 2, **dadurch gekennzeichnet, dass** die endseitigen Gliederkörper (2, 3) in eine Führungsnut (8) eines Basisschenkels (9) eingreifende Lagerbolzen (6, 7) aufweisen.

4. Vorrichtung nach einem der Ansprüche 1 bis 3, **dadurch gekennzeichnet, dass** der Stelltrieb (5) eine Stellschraube (11) ist, die einen endseitigen Gliederkörper (2) durchsetzt und in ein Innengewinde des gegenüberliegenden endseitigen Gliederkörpers (3) eingreift.

5. Vorrichtung nach Anspruch 4, **dadurch gekennzeichnet, dass** der von der Stellschraube (11) durchsetzte Gliederkörper (2) eine Aussparung (12) für den Stellschraubenkopf (13) aufweist.

6. Vorrichtung nach einem der Ansprüche 1 bis 5, **dadurch gekennzeichnet, dass** Lagerbolzen (6, 7) in Ausnehmungen (10) der Gliederkörper (1, 2, 3) eingesetzt sind.

7. Vorrichtung nach Anspruch 6, **dadurch gekennzeichnet, dass** die Stellschraube (11) den Lagerbolzen (6) eines endseitigen Gliederkörpers (2) durchsetzt und in ein Innengewinde des Lagerbolzens (7) des gegenüberliegenden endseitigen Gliederkörpers (3) eingreift.
